# EUROPÄISCHE PATENTSCHRIFT

(11) **EP 3 309 073 B1**
(45) Veröffentlichungstag und Bekanntmachung des Hinweises auf die Patenterteilung: **23.03.2022**
(21) Anmeldenummer: 17196238.4
(22) Anmeldetag: 12.10.2017
(51) Int. Cl.: B64D 11/06, B61D 33/00, B60N 2/882

(54) **KOPFSTÜTZENVORRICHTUNG**
HEAD RESTRAINT DEVICE
DISPOSITIF D'APPUI-TÊTE

(30) Priorität: 12.10.2016 DE 102016119469
(43) Veröffentlichungstag der Anmeldung: 18.04.2018
(73) Patentinhaber: Recaro Aircraft Seating GmbH & Co. KG, 74523 Schwäbisch Hall (DE)
(72) Erfinder: Erb, Andreas, 74523 Schwäbisch Hall (DE); Tute, Christopher, 67808 Schönborn (DE)
(74) Vertreter: Daub, Thomas

(56) Entgegenhaltungen:
- WO-A1-00/38946
- AU-B3- 565 990
- US-A- 2 983 310
- US-A- 5 345 633
- US-A1- 2004 124 685
- US-A1- 2006 076 810
- US-A1- 2009 065 540

## Beschreibung

### Stand der Technik

Die Erfindung betrifft eine Kopfstützenvorrichtung nach dem Oberbegriff des Patentanspruchs 1.

Es ist bereits eine Kopfstützenvorrichtung für einen Sitz, insbesondere einen Flugzeugsitz, mit einer Kopfstütze, die wenigstens einen Kopfabstützbereich ausbildet, vorgeschlagen worden.

Die Druckschrift WO 00/38946 A1 offenbart eine Kopfstützenvorrichtung für einen Sitz, insbesondere einen Flugzeugsitz, welche eine Kopfstütze aufweist, die als ein separates, mit einer Rückenlehne des Sitzes verbindbares Element ausgebildet ist, die wenigstens einen Kopfabstützbereich ausbildet und wenigstens ein Bezugselement und zumindest ein Befestigungsmodul mit wenigstens einem Befestigungsmittel aufweist.

Die Aufgabe der Erfindung besteht insbesondere darin, eine gattungsgemäße Vorrichtung mit verbesserten Eigenschaften hinsichtlich eines Komforts für einen Passagier bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Kopfstützenvorrichtung für einen Sitz, insbesondere einen Flugzeugsitz, welche eine Kopfstütze aufweist, die als ein separates, mit einer Rückenlehne des Sitzes verbindbares Element ausgebildet ist, die wenigstens einen Kopfabstützbereich ausbildet und wenigstens ein Bezugselement aufweist.

Es wird vorgeschlagen, dass die Kopfstützenvorrichtung zumindest ein Befestigungsmodul mit wenigstens einem Befestigungsmittel aufweist, das auf einer Vorderseite der Kopfstütze von einem oberen Ende zu einem unteren Ende verläuft und das als ein elastisches Band ausgebildet ist, das an dem Bezugselement angebracht und das dazu vorgesehen ist, zumindest einen persönlichen Gegenstand, der ein Kissen, ein Kleidungsstück oder eine Decke ist, in dem Kopfabstützbereich anzubringen, wobei ein auf dem Sitz sitzender Passagier den persönlichen Gegenstand mittels des Befestigungsmoduls über das Befestigungsmittel an die Kopfstütze anbinden kann, wozu der Passagier das Befestigungsmittel durch Ziehen an dem Befestigungsmittel elastisch verlängern kann, wodurch zwischen dem Kopfabstützbereich der Kopfstütze und dem Befestigungsmittel ein Raum entsteht, in den der Passagier den Gegenstand einführen kann. Unter einem "Flugzeugsitz" soll dabei insbesondere ein Sitz verstanden werden, der dazu vorgesehen ist, in einer Flugzeugkabine eines Flugzeugs auf einem Kabinenboden aufgeständert zu werden, und auf dem ein Passagier während eines Flugs sitzen kann. Dabei weist der Flugzeugsitz zumindest einen Sitzboden, eine mit dem Sitzboden gekoppelte Rückenlehne und eine Kopfstütze auf, wobei die Rückenlehne vorzugsweise verschwenkbar mit dem Sitzboden verbunden ist, wodurch der Flugzeugsitz vorzugsweise in unterschiedliche Funktionsstellungen bewegbar ist. Grundsätzlich ist es auch denkbar, dass die Rückenlehne und der Sitzboden starr miteinander gekoppelt sind. Unter einer "Kopfstütze" soll dabei insbesondere ein Element oder eine Vorrichtung verstanden werden, die dazu vorgesehen ist, dass ein auf dem Flugzeugsitz sitzender Passagier seinen Kopf und/oder Nackenbereich daran abstützen kann. Die Kopfstütze ist als ein separates, mit der Rückenlehne verbindbares Element ausgebildet, das beispielsweise in seiner Höhe zu der Rückenlehne verstellbar ist und/oder verschwenkbare Seitenelemente aufweist. Grundsätzlich ist es aber ebenso denkbar, dass die Kopfstütze einstückig mit der Rückenlehne ausgebildet ist und insbesondere von demselben Element gebildet ist wie die Rückenlehne, beispielsweise aus einem Verbundwerkstoff mit einer Polsterung oder einem Rahmen mit einer Bespannung. Unter einem "Kopfstützbereich" soll dabei insbesondere ein Bereich verstanden werden, in dem ein Passagier mit seinem Kopf aufliegt, wenn er sich an der Kopfstütze mit seinem Kopf abstützt. Vorzugsweise ist der Kopfstützbereich auf einer Vorderseite der Kopfstütze angeordnet. Der Kopfstützbereich ist insbesondere als ein Bereich ausgebildet der in Flugrichtung ausgerichtet ist. Eine Flächennormale des Kopfstützbereichs ist in einem Normalbetriebszustand im Wesentlichen in Sitzrichtung des Flugzeugsitzes ausgerichtet. Ein Kopfabstützbereich ist insbesondere nicht als ein rückseitiger Bereich einer Kopfstütze oder einer Rückenlehne ausgebildet, der einem hinter dem Flugzeugsitz angeordneten Bereich, wie insbesondere einem weiteren Flugzeugsitz, zugewandt ist. Unter einem "Befestigungsmodul" soll dabei insbesondere ein Modul aus wenigstens einem Element oder Mittel, wie insbesondere einem Befestigungsmittel, verstanden werden, wobei das Befestigungsmodul dazu vorgesehen ist, dass an ihm zumindest ein Element in zumindest einer Position befestigbar ist und dadurch an die Kopfstütze angebunden werden kann. Unter einem "Befestigungsmittel" soll dabei insbesondere ein Element oder Mittel verstanden werden, das dazu vorgesehen ist, an einem Trägerelement, wie insbesondere der Kopfstütze, befestigt zu werden und dabei weitere Gegenstände, wie insbesondere persönliche Gegenstände einer auf dem Sitz sitzenden Person, an dem Trägerelement zumindest temporär zu befestigen. Dabei ist ein Befestigungsmittel insbesondere als ein zumindest teilweise elastisches Band ausgebildet, wobei das Befestigungsmittel stark elastisch verformbar oder nur minimal elastisch verformbar ausgebildet sein kann. Dabei soll unter "stark elastisch verformbar" eine mögliche elastische Längenveränderung von 20% bis 40% verstanden werden. Unter "minimal elastisch verformbar" soll dabei eine maximal mögliche elastische Längenveränderung von 1% bis 5% verstanden werden. Grundsätzlich ist es auch denkbar, dass ein Befestigungsmittel als eine Tasche oder ein Netz ausgebildet ist, wobei die zu befestigenden Elemente in einen von der Tasche oder dem Netz aufgespannten Raum zwischen der Tasche oder dem Netz und dem Trägerelement eingeklemmt werden können. Unter einem "persönlichen Gegenstand" soll dabei insbesondere ein einem auf dem Sitz sitzenden Passagier zugeordneter Gegenstand verstanden werden, wie beispielsweise ein Kissen, ein Kleidungsstück, wie beispielsweise eine Jacke oder ein Pulli, eine Decke oder ein anderer, dem Fachmann als sinnvoll erscheinender persönlicher Gegenstand. Dabei ist es sowohl denkbar, dass der persönliche Gegenstand von dem auf dem Sitz sitzenden Passagier selbst mitgebracht ist oder dass der persönliche Gegenstand von einer den Sitz bereitstellenden Gesellschaft, wie insbesondere einer Airline, einem Passagier speziell für dessen Gebrauch ausgehändigt wurde. Vorteilhaft ist der in dem Kopfstützbereich anbringbare persönliche Gegenstand dazu vorgesehen, einen Kopfabstützbereich für den Passagier bereitzustellen, vorzugsweise insbesondere den Kopfabstützbereich der Kopfstütze individuell anzupassen. Dadurch kann ein Passagier den Kopfabstützbereich vorteilhaft einfach, besonders vorteilhaft mit einem persönlichen vertrauten Gegenstand an seine Bedürfnisse anpassen. Unter "vorgesehen" soll insbesondere ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann ein Passagier vorteilhaft einen persönlichen Gegenstand in dem Kopfabstützbereich der Kopfstütze anbringen, um so einen individuell angepassten und dadurch für den Passagier besonders komfortabel ausgebildeten Kopfabstützbereich zu erreichen. Dadurch kann vorteilhaft ein Komfort des Sitzes erhöht werden.

Weiter wird vorgeschlagen, dass das wenigstens eine Befestigungsmittel dazu vorgesehen ist, einen persönlichen Gegenstand seitlich im Kopfabstützbereich anzubringen. Unter "seitlich im Kopfabstützbereich" soll dabei insbesondere in einem Bereich verstanden werden, der, in einer Querrichtung gesehen, an einem seitlichen Ende der Kopfstütze angebracht ist. Eine Querrichtung ist dabei orthogonal zu einer Sitzrichtung und einer Vertikalrichtung ausgerichtet. Dadurch kann vorteilhaft eine seitliche Abstützung durch den persönlichen Gegenstand erreicht werden, wodurch insbesondere auf zusätzliche Bauteile an der Kopfstütze, wie beispielsweise seitlich angebrachte schwenkbare Flügel, verzichtet werden kann. Dadurch kann insbesondere eine kostengünstige und leichte Kopfstützenvorrichtung bereitgestellt werden.

Ferner wird vorgeschlagen, dass das Befestigungsmodul wenigstens zwei Befestigungsmittel aufweist, die an gegenüberliegenden Seiten des Kopfabstützbereichs angeordnet sind. Unter "gegenüberliegenden Seiten des Kopfabstützbereichs" soll dabei, insbesondere in Querrichtung gesehen, an gegenüberliegenden seitlichen Enden der Kopfstütze verstanden werden. Dadurch können die Befestigungsmittel besonders vorteilhaft zur Anbindung von persönlichen Gegenständen platziert werden.

Unter "elastisch verlängerbar" soll dabei insbesondere verstanden werden, dass das elastische Befestigungsmittel zumindest in seiner Haupterstreckungsrichtung um zumindest 5%, vorzugsweise um zumindest 10 % und in einer besonders vorteilhaften Ausgestaltung um zumindest 20% elastisch verlängerbar ist. Dabei wird die elastische Verlängerung durch eine von außen auf das Befestigungsmittel einwirkende Kraft, beispielsweise durch Ziehen an dem Befestigungsmittel durch einen Passagier, erzeugt. Das Befestigungsmittel zieht sich nach Wegfall der einwirkenden Kraft und wenn kein weiteres Element dies verhindert, in seinen Ursprungszustand zurück. Dadurch kann das Befestigungsmittel besonders einfach und insbesondere simpel und intuitiv zu bedienen ausgebildet werden.

Des Weiteren wird vorgeschlagen, dass das wenigstens eine Befestigungsmittel zumindest ein Anbindungsmittel aufweist, mittels dessen das Befestigungsmittel an die Kopfstütze angebunden werden kann. Unter einem "Anbindungsmittel" soll dabei insbesondere ein Kraft- und/oder Formschlusselement verstanden werden, mittels dessen das Anbindungsmittel an der Kopfstütze kraft- und/oder formschlüssig mit der Kopfstütze verbunden werden kann. Eine kraft- und/oder formschlüssige Verbindung, mittels der das Befestigungsmittel mit der Kopfstütze verbunden ist, ist zum Entfernen des Befestigungsmittels von der Kopfstütze zerstörungsfrei trennbar. Ein "Anbindungsmittel" ist dabei vorzugsweise als ein Flausch- und Hakenband, ein Druckknopf, eine Naht, ein Durchgangsloch oder ein anderes, dem Fachmann als sinnvoll erscheinendes Kraft- und/oder Formschlusselement ausgebildet. Dabei weisen das Befestigungsmittel und die Kopfstütze jeweils zueinander korrespondierend ausgebildete Anbindungsmittel auf, die zur Verbindung kraft- und/oder formschlüssig miteinander verbindbar sind. Dadurch kann das Befestigungsmittel vorteilhaft von der Kopfstütze getrennt werden, um beispielsweise gereinigt zu werden oder bei einem Defekt ausgetauscht zu werden.

Unter einem "getrennten Einzelmodul" soll dabei insbesondere ein Element verstanden werden, das getrennt von der Kopfstütze ausgebildet ist und insbesondere nicht an der Kopfstütze fest befestigt ist. Dadurch kann das Befestigungsmodul vorteilhaft als ein von einer Fluggesellschaft zur Verfügung gestelltes Giveaway ausgebildet werden.

Unter einem "zusätzlichen Bezugselement" soll dabei insbesondere ein Schonbezug, ein sogenanntes Antimakassar, verstanden werden, das zusätzlich zu einem normalen Bezug der Kopfstütze zumindest in einem Teilbereich eines Kopfabstützbereichs der Kopfstütze den normalen Bezug überdeckt, um diesen insbesondere vor Abnutzung und Verschmutzung zu schützen. Das zusätzliche Bezugselement ist dabei vorzugsweise in einem mittleren Bereich des Kopfabstützbereichs angeordnet, in dem ein Kopf eines Passagiers am häufigsten abgestützt wird. Unter "zusammen mit dem Befestigungsmodul befestigt" soll dabei insbesondere verstanden werden, dass das zusätzliche Bezugselement zumindest teilweise, vorzugsweise komplett über dieselben Anbindungsmittel mit der Kopfstütze oder einem Bezugselement der Kopfstütze verbunden ist. Dadurch kann vorteilhaft ein zusätzliches Bezugselement bereitgestellt werden, das besonders einfach zusammen mit dem Befestigungsmodul an die Kopfstütze angebunden werden kann.

Zudem wird vorgeschlagen, dass das Befestigungsmittel zumindest einen elastischen Teilbereich und einen unelastischen Teilbereich aufweist. Dabei ist der zumindest eine elastische Teilbereich insbesondere dazu vorgesehen, in einem nicht sichtbaren Bereich der Kopfstütze angeordnet zu werden. Insbesondere vorteilhaft ist der zumindest eine elastische Teilbereich des Befestigungsmittels unterhalb oder innerhalb eines Bezugs der Kopfstütze angeordnet. Grundsätzlich ist es auch denkbar, dass der elastische Teilbereich des Befestigungsmittels zumindest teilweise im Inneren der Kopfstütze angeordnet ist. Dadurch kann das Befestigungsmittel besonders vorteilhaft ausgebildet werden. Ferner wird vorgeschlagen, dass der zumindest eine elastische Teilbereich auf einer Rückseite der Kopfstütze angeordnet ist. Dadurch kann der elastische Teilbereich des Befestigungsmittels besonders vorteilhaft angeordnet werden.

Die erfindungsgemäße Kopfstützenvorrichtung soll hierbei nicht auf die oben beschriebene Anwendung und Ausführungsform beschränkt sein. Insbesondere kann die erfindungsgemäße Kopfstützenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind neun Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Ansicht einer Sitzreihe mit mehreren Sitzen, die jeweils eine erfindungsgemäße Kopfstützenvorrichtung in einem ersten Ausführungsbeispiel aufweisen,
- Fig. 2: eine Ansicht einer Kopfstütze der Kopfstützenvorrichtung von hinten,
- Fig. 3: eine schematische Darstellung der Kopfstütze der Kopfstützenvorrichtung von vorne,
- Fig. 4: eine schematische Darstellung eines Sitzes mit einer erfindungsgemäßen Kopfstützenvorrichtung in einem zweiten Ausführungsbeispiel,
- Fig. 5: eine schematische Darstellung eines Sitzes mit einer Kopfstützenvorrichtung in einem dritten Ausführungsbeispiel, die teilweise nicht erfindungsgemäß ausgestaltet ist und lediglich zur Veranschaulichung dient,
- Fig. 6: eine schematische Darstellung eines Sitzes mit einer erfindungsgemäßen Kopfstützenvorrichtung in einem vierten Ausführungsbeispiel, die teilweise nicht erfindungsgemäß ausgestaltet ist und lediglich zur Veranschaulichung dient,
- Fig. 7: eine schematische Darstellung einer Kopfstütze mit einer nicht erfindungsge-mäßen Kopfstützenvorrichtung in einem fünften Ausführungsbeispiel, das lediglich zur Veranschaulichung dient, und
- Fig. 8: eine schematische Darstellung einer Kopfstütze mit einer nicht erfindungsge-mäßen Kopfstützenvorrichtung in einem sechsten Ausführungsbeispiel, das lediglich zur Veranschaulichung dient,
- Fig. 9: eine schematische Darstellung eines Sitzes mit einer Kopfstützenvorrichtung in einem siebten Ausführungsbeispiel, die nicht erfindungsgemäß ausgestaltet ist und lediglich zur Veranschaulichung dient,
- Fig. 10: eine schematische Schnittdarstellung einer Kopfstütze mit einer Kopfstützenvorrichtung in einem achten Ausführungsbeispiel, die nicht erfindungsgemäß ausgestaltet ist und lediglich zur Veranschaulichung dient, und
- Fig. 11: eine schematische Schnittdarstellung einer Kopfstütze mit einer Kopfstützenvorrichtung in einem neunten Ausführungsbeispiel, die nicht erfindungsgemäß ausgestaltet ist und lediglich zur Veranschaulichung dient.

### Beschreibung der Ausführungsbeispiele

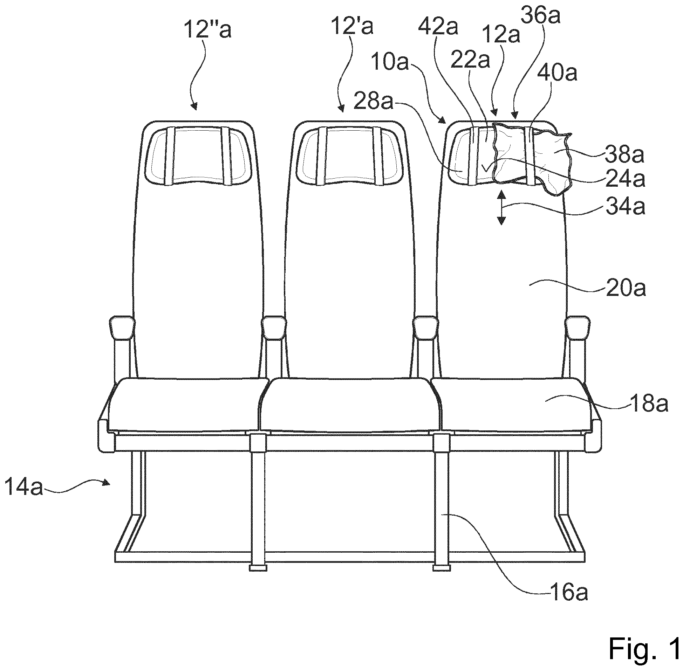

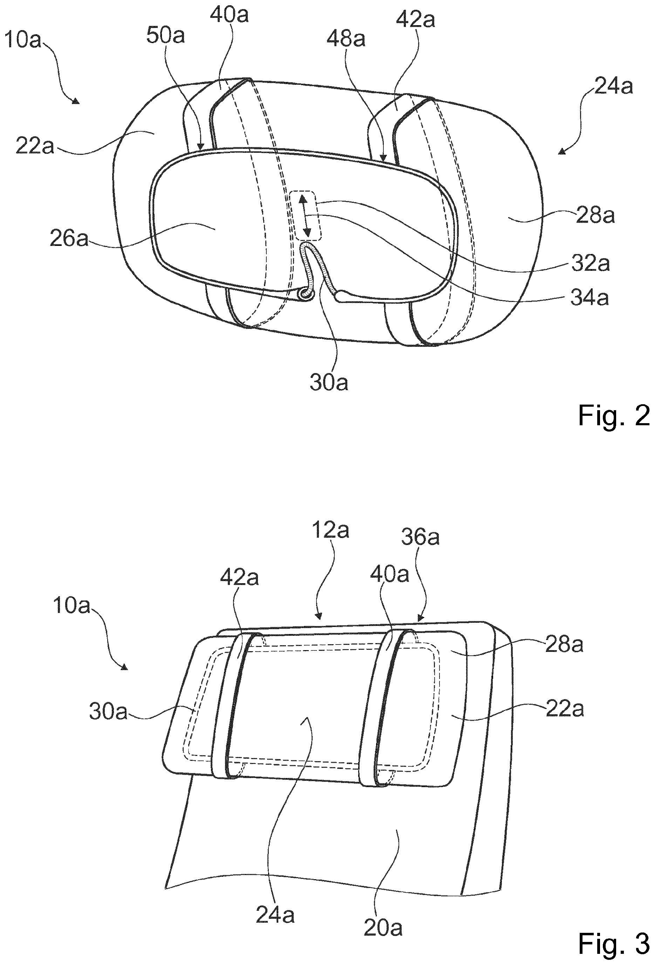

In den Figuren 1 bis 3 ist ein erstes Ausführungsbeispiel einer erfindungsgemäßen Kopfstützenvorrichtung 10a dargestellt. Die Kopfstützenvorrichtung 10a ist als Teil eines Sitzes 12a ausgebildet. Der Sitz 12a ist als ein Flugzeugsitz ausgebildet. Der als Flugzeugsitz ausgebildete Sitz 12a ist dabei als ein Teil einer Sitzreihe 14a ausgebildet. Die Sitzreihe 14a umfasst drei Sitze 12a, 12a', 12", wobei die Sitze 12a, 12a', 12" im Wesentlichen gleich ausgebildet sind, weswegen im Folgenden lediglich der Sitz 12a beschrieben werden soll. Grundsätzlich wäre es auch denkbar, dass der Sitz 12a als ein Einzelsitz oder als ein Teil einer Sitzreihe mit einer anderen Anzahl von Sitzen 12a ausgebildet ist. Der Sitz 12a umfasst eine Aufständereinheit 16a. Mittels der Aufständereinheit 16a ist der Sitz 12a auf einem Kabinenboden aufgeständert. Der Kabinenboden ist dabei als ein Teil einer Flugzeugkabine ausgebildet. Die Aufständereinheit 16a ist dabei als ein Teil der gesamten Sitzreihe 14a ausgebildet. Der Sitz 12a umfasst einen Sitzboden 18a. Der Sitzboden 18a ist mit der Aufständereinheit 16a gekoppelt. Der Sitzboden 18a ist dazu vorgesehen, einen Sitzbereich für einen Passagier bereitzustellen. Der Sitz 12a weist eine Rückenlehne 20a auf. Die Rückenlehne 20a ist dazu vorgesehen, eine Rückenlehnenfläche bereitzustellen, an der sich ein auf dem Sitz 12a sitzender Passagier mit seinem Rücken abstützen kann. Die Rückenlehne 20a ist an ihrem unteren Ende mit dem Sitzboden 18a und der Aufständereinheit 16a gekoppelt. Dabei ist es denkbar, dass die Rückenlehne 20a direkt mit dem Sitzboden 18a und/oder der Aufständereinheit 16a gekoppelt ist oder über ein weiteres Bauteil, wie insbesondere einen Sitzteiler, indirekt mit dem Sitzboden 18a und/oder der Aufständereinheit 16a gekoppelt ist. Dabei ist es denkbar, dass der Sitzboden 18a und/oder die Rückenlehne 20a zwischen einer TTL-Stellung und einer Komfortstellung zu der Aufständereinheit 16a verschwenkbar sind oder lediglich in einer definierten Grundstellung fix zueinander fixiert sind.

Die Kopfstützenvorrichtung 10a ist Teil des Sitzes 12a und weist eine Kopfstütze 22a auf. Die Kopfstütze 22a ist in einem oberen Bereich der Rückenlehne 20a angeordnet. Die Kopfstütze 22a ist dazu vorgesehen, einen Kopfabstützbereich 24a für einen Passagier auszubilden. Eine Vorderseite der Kopfstütze 22a, die in Sitzrichtung ausgerichtet ist, bildet den Kopfabstützbereich 24a aus. Die Kopfstütze 22a weist einen Grundkörper 26a auf. Der Grundkörper 26a ist von einer dünnen Platte ausgebildet. Dabei ist es denkbar, dass die dünne Platte eben ausgebildet ist oder eine Krümmung aufweist. Der Grundkörper 26a ist dabei von einem Verbundwerkstoff gebildet. Grundsätzlich ist es auch denkbar, dass der Grundkörper 26a von einem Metallblech gebildet ist. Die Kopfstütze 22a weist ein nicht näher dargestelltes Komfortelement auf, das auf einer Vorderseite des Grundkörpers 26a angebracht ist. Das Komfortelement ist dabei aus einem Schaumelement, wie beispielsweise einem PU-Schaum, gebildet. Grundsätzlich ist es auch denkbar, dass das Komfortelement aus einem anderen, dem Fachmann als sinnvoll erscheinenden Material gebildet ist. Die Kopfstütze 22a weist ein Bezugselement 28a auf. Das Bezugselement 28a ist dabei in einem montierten Zustand über den Grundkörper 26a und das Komfortelement gespannt und bildet den Kopfabstützbereich 24a aus. Das Bezugselement 28a ist von einem Textil gebildet. Dabei überdeckt das Bezugselement 28a das Komfortelement auf einer Vorderseite komplett. Auf einer Rückseite weist das Bezugselement 28a eine mit einem Gummielement 30a belastete Öffnung auf, über die das Bezugselement 28a über den Grundkörper 26a und das Komfortelement gestülpt werden kann. Dabei wird das Bezugselement 28a über das Gummielement 30a auf dem Grundkörper 26a gehalten. Grundsätzlich ist es auch denkbar, dass das Bezugselement 28a ein oder mehrere Formschlusselemente, wie beispielsweise Druckknöpfe oder einen Reißverschluss, aufweist, über den oder die das Bezugselement 28a mit dem Grundkörper 26a gekoppelt werden kann oder die Öffnung des Bezugselements 28a geschlossen werden kann. Die Kopfstütze 22a ist dabei fest mit der Rückenlehne 20a verbindbar. Dabei weist die Kopfstütze 22a eine nicht näher dargestellte Lagereinheit 32a auf, über die die Kopfstütze 22a in dem oberen Bereich der Rückenlehne 20a in einer Bewegungsachse 34a linear in ihrer Höhe zu der Rückenlehne 20a verstellt werden kann.

Die Kopfstützenvorrichtung 10a umfasst ein Befestigungsmodul 36a. Das Befestigungsmodul 36a ist dazu vorgesehen, dass zumindest ein persönlicher Gegenstand 38a in dem Kopfabstützbereich 24a angebracht werden kann. Ein Gegenstand 38a ist mittels des Befestigungsmoduls 36a verliersicher an der Kopfstütze 22a anbringbar. Insbesondere ist ein Gegenstand 38a mittels des Befestigungsmoduls 36a mittels einer Klemmverbindung mit an die Kopfstütze 22a anbindbar. Dadurch kann ein auf dem Sitz 12a sitzender Passagier den Kopfabstützbereich 24a vorteilhaft so personalisieren, dass dieser möglichst komfortabel für ihn ist. Der persönliche Gegenstand 38a ist dabei beispielsweise als ein Kissen ausgebildet, wie es in Figur 1 dargestellt ist. Dabei kann der als Kissen ausgebildete persönliche Gegenstand 38a tatsächliches Eigentum des auf dem Sitz 12a sitzenden Passagiers sein und von diesem mitgebracht worden sein. Grundsätzlich ist es auch denkbar, dass der persönliche Gegenstand 38a als ein von einer Fluggesellschaft, insbesondere für einen Flug, ausgegebenes Kissen ausgebildet ist, das beispielsweise nach dem Flug zurückgegeben werden muss oder von dem Passagier behalten werden kann. Grundsätzlich ist es auch denkbar, dass der persönliche Gegenstand 38a als ein Kleidungsstück, wie beispielsweise ein Pullover oder eine Jacke, ausgebildet ist.

Zur Anbringung des persönlichen Gegenstands 38a in dem Kopfabstützbereich 24a weist das Befestigungsmodul 36a ein erstes Befestigungsmittel 40a und ein zweites Befestigungsmittel 42a auf. Grundsätzlich ist es auch denkbar, dass das Befestigungsmodul 36a lediglich ein Befestigungsmittel 40a, 42a aufweist. Die Befestigungsmittel 40a, 42a sind dabei an gegenüberliegenden Seiten des Kopfabstützbereichs 24a angeordnet. Die Befestigungsmittel 40a, 42a sind als Bänder ausgebildet. Die Befestigungsmittel 40a, 42a sind dabei als elastische Bänder ausgebildet. Die Befestigungsmittel 40a. 42a sind dadurch elastisch verlängerbar ausgebildet. Die Befestigungsmittel 40a, 42a verlaufen dabei auf der Vorderseite der Kopfstütze 22a von einem oberen Ende zu einem unteren Ende. Dabei sind die Befestigungsmittel 40a, 42a im Wesentlichen parallel zu einer Vertikalachse der Kopfstütze 22a ausgerichtet. Grundsätzlich ist es auch denkbar, dass die Befestigungsmittel 40a, 42a leicht schräg zu der Vertikalachse der Kopfstütze 22a ausgerichtet sind. Die Befestigungsmittel 40a, 42a sind dabei an dem Bezugselement 28a der Kopfstütze 22a angebracht. Die Befestigungsmittel 40a, 42a sind dabei auf einer Rückseite der Kopfstütze 22a mit dem Bezugselement 28a verbunden. Zur Anbindung an die Kopfstütze 22a weisen die Befestigungsmittel 40a, 42a jeweils zwei Anbindungsmittel 48a, 50a auf, über die die Befestigungsmittel 40a, 42a fest an das Bezugselement 28a und dadurch an die Kopfstütze 22a angebunden sind. Die Anbindungsmittel 48a, 50a sind dabei jeweils als eine Naht ausgebildet. Dadurch sind die Befestigungsmittel 40a, 42a zur festen Anbindung an die Kopfstütze 22a mit dem Bezugselement 28a vernäht. Grundsätzlich wäre es auch denkbar, dass die Befestigungsmittel 40a, 42a fest mit dem Komfortelement oder einem anderen Teil der Kopfstütze über als Nähte ausgebildete Anbindungsmittel 48a, 50a an die Kopfstütze 22a angebunden sind.

Mittels des Befestigungsmoduls 36a kann ein auf dem Sitz 12a sitzender Passagier einen persönlichen Gegenstand 38a, wie in Figur 1 dargestellt, über das Befestigungsmittel 40a an die Kopfstütze 22a anbinden. Dazu kann der Passagier das Befestigungsmittel 40a durch Ziehen an dem Befestigungsmittel 40a elastisch verlängern, wodurch zwischen dem Kopfabstützbereich 24a der Kopfstütze 22a und dem Befestigungsmittel 40a ein Raum entsteht, in den der Passagier den Gegenstand 38a einführen kann. Nachdem der Passagier die Kraft auf das Befestigungsmittel 40a zurückgenommen hat, zieht sich das Befestigungsmittel 40a durch seine innere Spannung, die durch das elastische Auseinanderziehen entstanden ist, wieder in Richtung seiner Ruhestellung auf der Kopfstütze 22a zusammen, wodurch der Gegenstand 38a zwischen dem Befestigungsmittel 40a und der Kopfstütze 22a eingeklemmt wird. Dadurch hält das Befestigungsmittel 40a den Gegenstand 38a in dem Kopfabstützbereich 24a der Kopfstütze 22a. Dabei kann ein Passagier den Gegenstand 38a so formen und über das Befestigungsmittel 40a entsprechend positionieren, dass eine für ihn optimale und komfortable Abstützfläche für seinen Kopf gebildet wird. Alternativ könnte der Passagier den Gegenstand 38a auch über das andere Befestigungsmittel 42a des Befestigungsmoduls 36a auf der gegenüberliegenden Seite des Kopfabstützbereichs 24a anbringen oder über beide Befestigungsmittel 40a, 42a an die Kopfstütze 22a anbinden.

Grundsätzlich ist es auch denkbar, dass das Bezugselement 28a und das daran befestigte Befestigungsmodul 36a als ein separater Einmalartikel ausgebildet sind. Dabei ist es denkbar, dass das Bezugselement 28a zusammen mit dem Befestigungsmodul 36a dazu vorgesehen ist, über einen vorhandenen Bezug der Kopfstütze 22a übergezogen zu werden. Dabei ist es denkbar, dass das Bezugselement 28a mit dem daran befestigten Befestigungsmodul 36a einem Passagier ausgehändigt wird, sodass dieser es selbständig an der Kopfstütze 22a anbringen kann, wenn er dies möchte, oder dass das Bezugselement 28a mit dem daran befestigten Befestigungsmodul 36a schon vor einem Flug an der Kopfstütze 22a befestigt ist und nach dem Flug wieder entfernt wird.

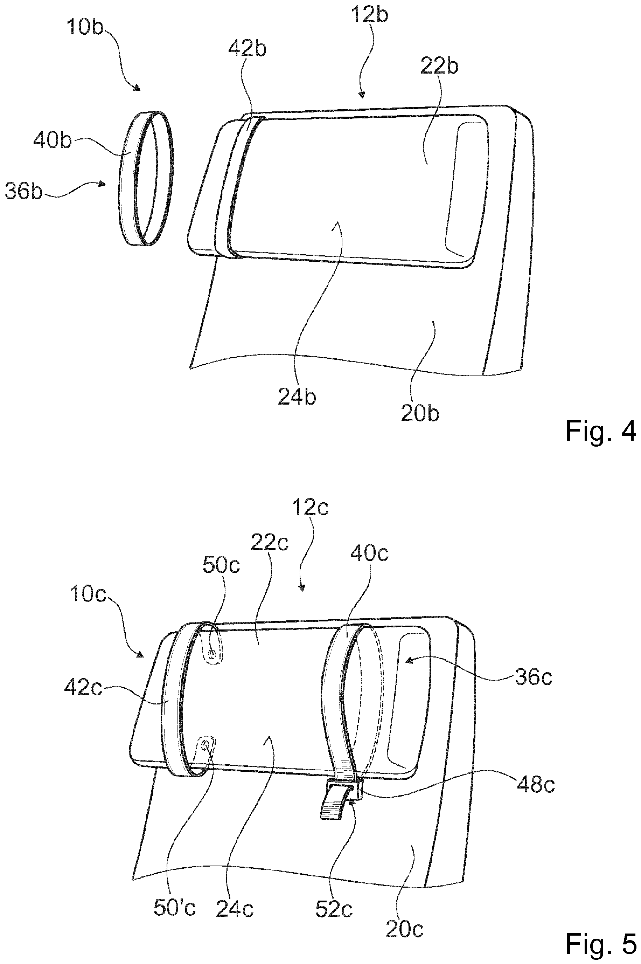

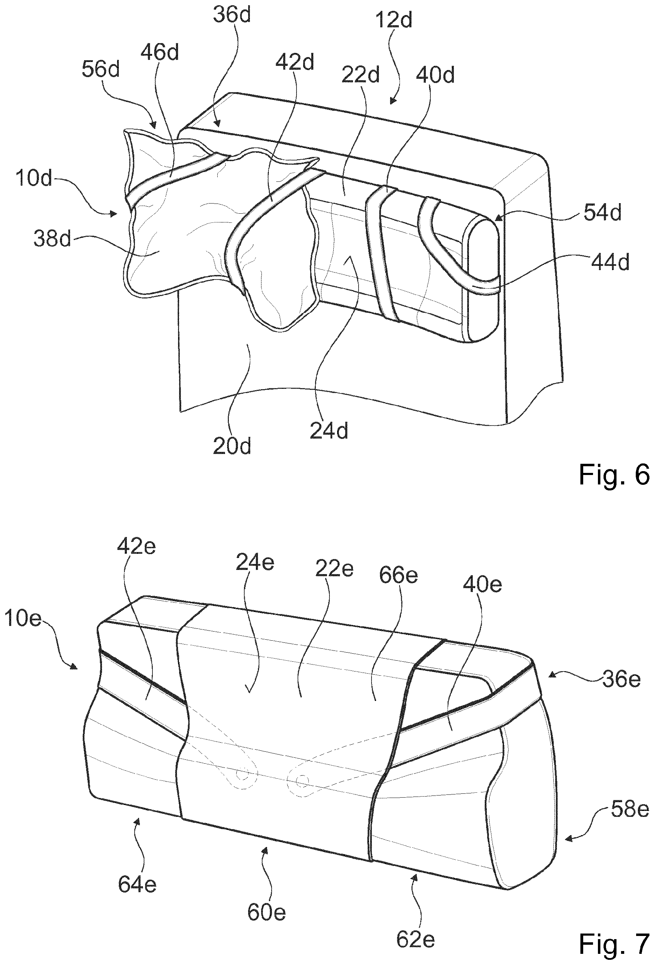

In den Fig. 4 bis 11 sind acht weitere Ausführungsbeispiele gezeigt, wobei die in den Figuren 7-11 gezeigten Ausführungsbeispiele nicht erfindungsgemäß sind. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 3, verwiesen werden kann. Zur Unterscheidung der Ausführungsbeispiele ist der Buchstabe a den Bezugszeichen des Ausführungsbeispiels in Fig. 1 bis 3 nachgestellt. In den Ausführungsbeispielen der Fig. 4 bis 11 ist der Buchstabe a durch die Buchstaben b bis i ersetzt.

Figur 4 zeigt ein zweites Ausführungsbeispiel einer Kopfstützenvorrichtung 10b, die teilweise nicht erfindungsgemäß ausgestaltet ist und lediglich zur Veranschaulichung dient. Die Kopfstützenvorrichtung 10b ist als Teil eines Sitzes 12b ausgebildet. Der Sitz 12b ist im Wesentlichen gleich ausgebildet wie der entsprechende Sitz aus dem ersten Ausführungsbeispiel und umfasst ebenfalls einen Sitzboden und eine Rückenlehne 20b. Die Kopfstützenvorrichtung 10b ist Teil des Sitzes 12b und weist eine Kopfstütze 22b auf. Die Kopfstütze 22b ist in einem oberen Bereich der Rückenlehne 20b angeordnet. Die Kopfstütze 22b ist dazu vorgesehen, einen Kopfabstützbereich 24b für einen Passagier auszubilden. Die Kopfstütze 22b ist dabei im Wesentlichen identisch zu der entsprechenden Kopfstütze aus dem ersten Ausführungsbeispiel ausgebildet.

Die Kopfstützenvorrichtung 10b umfasst ein Befestigungsmodul 36b. Das Befestigungsmodul 36b ist dazu vorgesehen, dass zumindest ein persönlicher Gegenstand, der in der Figur 4 nicht näher dargestellt ist, in dem Kopfabstützbereich 24b angebracht werden kann. Ein Gegenstand ist mittels des Befestigungsmoduls 36b verliersicher an der Kopfstütze 22b anbringbar. Insbesondere ist ein Gegenstand mittels des Befestigungsmoduls 36b mittels einer Klemmverbindung mit an die Kopfstütze 22b anbindbar.

Im Unterschied zu dem ersten Ausführungsbeispiel ist das Befestigungsmodul 36b als ein von der Kopfstütze 22b getrenntes Einzelmodul ausgebildet. Dabei ist das Befestigungsmodul 36b nicht über Anbindungsmittel fest mit der Kopfstütze 22b gekoppelt. Zur Anbringung des persönlichen Gegenstands 38b in dem Kopfabstützbereich 24b weist das Befestigungsmodul 36b ein erstes Befestigungsmittel 40b und ein zweites Befestigungsmittel 42b auf. Die Befestigungsmittel 40b, 42b sind dabei als Einzelteile ausgebildet. Die Befestigungsmittel 40b, 42b sind jeweils von einem zu einem Ring geschlossenen Band ausgebildet. Dabei sind die Befestigungsmittel 40b, 42b aus einem elastischen Band gebildet. Dadurch können die Befestigungsmittel 40b, 42b einfach von der Kopfstütze 22b getrennt werden. In der Figur 4 ist das erste Befestigungsmittel 40b in einem von der Kopfstütze 22b getrennten Zustand dargestellt. Das zweite Befestigungsmittel 42b ist mit der Kopfstütze 22b verbunden dargestellt. Zur Anbindung eines der Befestigungsmittel 40b, 42b an der Kopfstütze 22b können diese seitlich auf die Kopfstütze 22b aufgeschoben werden. Dabei werden die Befestigungsmittel 40b, 42b vorzugsweise zunächst elastisch gedehnt, sodass sie einen Umfang aufweisen, der größer ist als ein Umfang der Kopfstütze 22b, wodurch die Befestigungsmittel 40b, 42b seitlich über die Kopfstütze 22b geführt werden können. Fällt eine Kraft, welche das entsprechende Befestigungsmittel 40b, 42b elastisch verlängert hat, weg, umschlingt das entsprechende Befestigungsmittel 40b, 42b die Kopfstütze 22b und wird durch eine innere federelastische Kraft an die Kopfstütze 22b gedrückt. Dadurch wird das entsprechende Befestigungsmittel 40b, 42b an der Kopfstütze 22b gehalten. Zur Befestigung eines persönlichen Gegenstands kann das entsprechende Befestigungsmittel 40b, 42b äquivalent zu dem ersten Ausführungsbeispiel ausgelenkt und ein entsprechender persönlicher Gegenstand zwischen dem Befestigungsmittel 40b, 42b des Befestigungsmoduls 36b und der Kopfstütze 22b eingeklemmt werden. Durch die Ausgestaltung des Befestigungsmoduls 36b und insbesondere der Befestigungsmittel 40b, 42b kann das Befestigungsmodul 36b besonders einfach und kostengünstig ausgebildet werden. Die Befestigungsmittel 40b, 42b des Befestigungsmoduls 36b könnten insbesondere einfach von einer Fluggesellschaft auch einzeln auf Wunsch ausgegeben werden. Die Befestigungsmittel 40b, 42b könnten dabei vorteilhaft mit einem Branding und/oder Werbung versehen sein und vorteilhaft als Giveaways von der Fluggesellschaft an Passagiere ausgegeben werden.

In der Figur 5 ist ein drittes Ausführungsbeispiel einer Kopfstützenvorrichtung 10c dargestellt, die teilweise nicht erfindungsgemäß ausgestaltet ist und lediglich zur Veranschaulichung dient. Die Kopfstützenvorrichtung 10c ist als Teil eines Sitzes 12c ausgebildet. Der Sitz 12c ist im Wesentlichen gleich ausgebildet wie der entsprechende Sitz aus dem ersten Ausführungsbeispiel und umfasst ebenfalls einen Sitzboden und eine Rückenlehne 20c. Die Kopfstützenvorrichtung 10c ist Teil des Sitzes 12c und weist eine Kopfstütze 22c auf. Die Kopfstütze 22c ist in einem oberen Bereich der Rückenlehne 20c angeordnet. Die Kopfstütze 22c ist dazu vorgesehen, einen Kopfabstützbereich 24c für einen Passagier auszubilden. Die Kopfstütze 22c ist dabei im Wesentlichen identisch zu der entsprechenden Kopfstütze aus dem ersten Ausführungsbeispiel ausgebildet.

Die Kopfstützenvorrichtung 10c umfasst ein Befestigungsmodul 36c. Das Befestigungsmodul 36c ist dazu vorgesehen, dass zumindest ein persönlicher Gegenstand 38c in dem Kopfabstützbereich 24c angebracht werden kann. Ein Gegenstand 38c ist mittels des Befestigungsmoduls 36c verliersicher an der Kopfstütze 22c anbringbar. Zur Anbringung des persönlichen Gegenstands 38c in dem Kopfabstützbereich 24c weist das Befestigungsmodul 36c ein erstes Befestigungsmittel 40c und ein zweites Befestigungsmittel 42c auf. Im Unterschied zu dem ersten Ausführungsbeispiel aus den Figuren 1 bis 3 sind insbesondere die Befestigungsmittel 40c, 42c unterschiedlich ausgebildet. Das erste Befestigungsmittel 40c ist als ein Band ausgebildet. Dabei ist das als Band ausgebildete Befestigungsmittel 40c nur minimal elastisch ausgebildet. Zur Anbindung des Befestigungsmittels 40c an die Kopfstütze 22c weist das Befestigungsmodul 36c ein Anbindungsmittel 48c auf. Das Anbindungsmittel 48c ist als ein im Wesentlichen rechteckiges Element ausgebildet, das an einem unteren Ende der Kopfstütze 22c angebracht ist. Das Anbindungsmittel 48c ist von einem Kunststoffkörper gebildet. Ein erstes Ende des als Band ausgebildeten Befestigungsmittels 40c ist fest mit dem Anbindungsmittel 48c verbunden. Von dem Anbindungsmittel 48c aus ist das Befestigungsmittel 40c hinter der Kopfstütze 22c nach oben und an einem oberen Ende der Kopfstütze 22c nach vorne, vor in den Kopfabstützbereich 24c und zurück zu dem Anbindungsmittel 48c geführt. Das Anbindungsmittel 48c weist ein Durchgangsloch 52c auf, durch das das zweite Ende des als Band ausgebildeten Befestigungsmittels 40c gefädelt ist. Dabei steht das zweite Ende des als Band ausgebildeten Befestigungsmittels 40c ein Stück über das Durchgangsloch 52c hinaus. Um einen persönlichen Gegenstand mittels des Befestigungsmittels 40c des Befestigungsmoduls 36c an der Kopfstütze 22c zu befestigen, kann durch Lockern des Befestigungsmittels 40c an dem Anbindungsmittel 48c ein Raum zwischen dem Befestigungsmittel 40c und der Kopfstütze 22c geschaffen werden, in den der persönliche Gegenstand eingebracht werden kann. Durch Ziehen an dem durch das Durchgangsloch 52c gefädelten zweiten Ende des Befestigungsmittels 40c kann dieses festgezurrt werden und der persönliche Gegenstand ist zwischen dem Befestigungsmittel 40c und der Kopfstütze 22c eingeklemmt. Grundsätzlich ist es natürlich auch denkbar, dass das Anbindungsmittel 48c an einer anderen Stelle angebracht ist, beispielsweise auf einer Rückseite der Kopfstütze 22c oder an dem oberen Ende der Kopfstütze 22c.

Das zweite Befestigungsmittel 42c ist im Wesentlichen ähnlich ausgebildet wie die Befestigungsmittel aus dem ersten Ausführungsbeispiel. Das Befestigungsmittel 42c ist als ein elastisches Band ausgebildet. Das Befestigungsmittel 42c ist im Unterschied zu dem ersten Ausführungsbespiel über zwei als Formschlusselemente ausgebildete Anbindungsmittele 50c, 50'c mit der Kopfstütze 22c verbunden. Die als Formschlusselemente ausgebildeten Anbindungsmittele 50c, 50'c sind als Durchgangslöcher in dem als Band ausgebildeten Befestigungsmittel 42c ausgebildet. Die als Durchgangslöcher ausgebildeten Anbindungsmittele 50c, 50'c sind dabei zur Anbindung an die Kopfstütze 22c formschlüssig mit nicht näher dargestellten Formschlusselementen formschlüssig verbunden. Die nicht näher dargestellten Formschlusselemente können dabei an der Kopfstütze 22c direkt oder an einem Bezugselement der Kopfstütze 22c angebracht sein. Die nicht näher dargestellten Formschlusselemente sind dabei beispielsweise als Knöpfe oder als einfache Erhebungen ausgebildet. Grundsätzlich ist es auch denkbar, dass die als Formschlusselemente ausgebildeten Anbindungsmittele 50c, 50'c auf eine andere, dem Fachmann als sinnvoll erscheinende Weise ausgebildet sind, beispielsweise als Druckköpfe oder als Flausch und Hakenband.

In der Figur 6 ist ein viertes Ausführungsbeispiel einer erfindungsgemäßen Kopfstützenvorrichtung 10d dargestellt. Die Kopfstützenvorrichtung 10d ist als Teil eines Sitzes 12d ausgebildet. Der Sitz 12d ist im Wesentlichen gleich ausgebildet wie der entsprechende Sitz aus dem ersten Ausführungsbeispiel und umfasst ebenfalls einen Sitzboden und eine Rückenlehne 20d. Die Kopfstützenvorrichtung 10d ist Teil des Sitzes 12d und weist eine Kopfstütze 22d auf. Die Kopfstütze 22d ist in einem oberen Bereich der Rückenlehne 20d angeordnet. Die Kopfstütze 22d ist dazu vorgesehen, einen Kopfabstützbereich 24d für einen Passagier auszubilden. Die Kopfstütze 22d ist dabei im Wesentlichen identisch zu der entsprechenden Kopfstütze aus dem ersten Ausführungsbeispiel ausgebildet.

Die Kopfstützenvorrichtung 10d umfasst ein Befestigungsmodul 36d. Das Befestigungsmodul 36d ist dazu vorgesehen, dass zumindest ein persönlicher Gegenstand 38d in dem Kopfabstützbereich 24d angebracht werden kann. Zur Anbringung des persönlichen Gegenstands 38d in dem Kopfabstützbereich 24d weist das Befestigungsmodul 36d ein erstes Befestigungsmittel 40d und ein zweites Befestigungsmittel 42d auf. Die beiden Befestigungsmittel 40d, 42d sind im Wesentlichen gleich ausgebildet wie die des ersten Ausführungsbeispiels, jedoch sind die beiden Befestigungsmittel 40d, 42d weiter von einem seitlichen Ende der Kopfstütze 22d entfernt als in dem ersten Ausführungsbeispiel. Des Weiteren weisen die beiden Befestigungsmittel 40d, 42d eine leichte Neigung zu einer Vertikalachse der Kopfstütze 22d auf. Die beiden Befestigungsmittel 40d, 42d weisen jeweils einen gleichen Abstand zu einer Mittelebene der Kopfstütze 22d auf. Zusätzlich zu den beiden in einem Mittelbereich angeordneten Befestigungsmitteln 40d, 42d weist das Befestigungsmodul 36d ein drittes Befestigungsmittel 44d und ein viertes Befestigungsmittel 46d auf. Die beiden zusätzlichen Befestigungsmittel 44d, 46d sind in einem äußeren Bereich der Kopfstütze 22d angeordnet. Dabei umspannen die beiden zusätzlichen Befestigungsmittel 44d, 46d jeweils eine obere Ecke 54d, 56d der Kopfstütze 22d. Die Befestigungsmittel 44d, 46d verlaufen dabei von einem oberen Ende der Kopfstütze 22d jeweils an ein benachbartes seitliches Ende der Kopfstütze 22d. Dadurch kann ein persönlicher Gegenstand 38d sowohl in einem mittleren Bereich der Kopfstütze 22d als auch in einer oberen Ecke der Kopfstütze 22d befestigt werden. Die Befestigungsmittel 40d, 42d, 44d, 46d sind dabei über nicht näher dargestellte Anbindungsmittele, die denen aus den vorhergehenden Ausführungsbeispielen entsprechen können, an der Kopfstütze 22d angebracht.

In der Figur 7 ist ein Ausführungsbeispiel einer nicht erfindungsgemäßen Kopfstützenvorrichtung 10e dargestellt. Die Kopfstützenvorrichtung 10e ist als Teil eines Sitzes ausgebildet. Der Sitz ist im Wesentlichen gleich ausgebildet wie der entsprechende Sitz aus dem ersten Ausführungsbeispiel und umfasst ebenfalls einen Sitzboden und eine Rückenlehne. Die Kopfstützenvorrichtung 10e ist Teil des Sitzes und weist eine Kopfstütze 22e auf. Die Kopfstütze 22e ist in einem oberen Bereich der Rückenlehne angeordnet. Die Kopfstütze 22e ist dazu vorgesehen, einen Kopfabstützbereich 24e für einen Passagier auszubilden. Die Kopfstütze 22e bildet einen Nackenstützbereich 58e aus. Zur Ausbildung des Nackenstützbereichs 58e ist die Kopfstütze 22e in einem unteren Bereich dicker ausgebildet als in einem oberen Bereich. Dabei weist der Nackenstützbereich 58e einen Mittelbereich 60e und zwei Seitenbereiche 62e, 64e auf, wobei der Nackenstützbereich 58e in den beiden Seitenbereichen 62e, 64e anders ausgebildet ist als in dem Mittelbereich 60e. In dem Mittelbereich 60e erhebt sich der Nackenstützbereich 58e in einer im Wesentlichen horizontal verlaufenden Linie. In den Seitenbereichen 62e, 64e erhebt sich der Nackenstützbereich 58e in einer schräg verlaufenden Linie, wobei der Nackenstützbereich 58e jeweils an einem äußersten Ende der Kopfstütze 22e am größten ist. Die beiden Seitenbereiche 62e, 64e des Nackenstützbereichs 58e sind dabei im Wesentlichen symmetrisch zueinander ausgebildet.

Die Kopfstützenvorrichtung 10e umfasst ein Befestigungsmodul 36e. Das Befestigungsmodul 36e ist dazu vorgesehen, dass zumindest ein persönlicher Gegenstand, der in der Figur 7 nicht näher dargestellt ist, in dem Kopfstützbereich 24e angebracht werden kann. Ein Gegenstand ist mittels des Befestigungsmoduls 36e verliersicher an der Kopfstütze 22e anbringbar. Insbesondere ist ein Gegenstand mittels des Befestigungsmoduls 36e mittels einer Klemmverbindung mit an die Kopfstütze 22e anbindbar. Zur Anbringung des persönlichen Gegenstands 38e in dem Kopfabstützbereich 24e weist das Befestigungsmodul 36e ein erstes Befestigungsmittel 40e und ein zweites Befestigungsmittel 42e auf. Die Befestigungsmittel 40e, 42e sind als Bänder ausgebildet. Die Befestigungsmittel 40e, 42e sind dabei insbesondere als elastische Bänder ausgebildet. Die Befestigungsmittel 40e, 42e sind dadurch elastisch verlängerbar ausgebildet. Im Unterschied zu dem ersten Ausführungsbeispiel aus den Figuren 1 bis 3 sind insbesondere die Befestigungsmittel 40e, 42e unterschiedlich ausgebildet. Insbesondere eine Ausrichtung der Befestigungsmittel 40e, 42e ist unterschiedlich zu denen aus den vorhergehenden Ausführungsbeispielen. Die Befestigungsmittel 40e, 42e sind jeweils mit einem ersten Ende auf einer Rückseite der Kopfstütze 22e angebunden. Dabei sind die Befestigungsmittel 40e, 42e mit ihren ersten Enden in einem oberen Bereich der Kopfstütze 22e angebracht. Mit ihren zweiten Enden sind die Befestigungsmittel 40e, 42e auf einer Vorderseite der Kopfstütze 22e an einem unteren Ende in dem Mittelbereich 60e angebunden. Die Befestigungsmittel 40e, 42e verlaufen dadurch in den Seitenbereichen 62e, 64e schräg. Die Befestigungsmittel 40e, 42e verlaufen in den Seitenbereichen 62e, 64e im Wesentlichen parallel zu einer Linie, in der die Kopfstütze 22e den Nackenstützbereich 58e ausbildet. In dem Mittelbereich 60e sind die Befestigungsmittel 40e, 42e von einem Bezugselement 66e überdeckt.

Die Kopfstütze 22e umfasst ein zusätzliches Bezugselement 66e. Das zusätzliche Bezugselement 66e ist als ein sogenanntes Antimakassar ausgebildet. Das Bezugselement 66e ist dazu vorgesehen, als einfach zu entfernendes, einen Bezug der Kopfstütze 22e zusätzlich überdeckendes Element eine Verschmutzung der Kopfstütze 22e zumindest teilweise zu verhindern. Das zusätzliche Bezugselement 66e ist dazu vorgesehen, ohne Demontage der Kopfstütze 22e und/oder eines Bezugs der Kopfstütze 22e von der Kopfstütze 22e getrennt zu werden. Das zusätzliche Bezugselement 66e ist dabei zusammen mit dem Befestigungsmodul 36e mit der Kopfstütze 22e verbunden. Dabei ist das zusätzliche Bezugselement 66e zusammen mit den Befestigungsmitteln 40e, 42e an der Rückseite der Kopfstütze über nicht näher dargestellte Anbindungselemente an die Kopfstütze 22e angebunden. Grundsätzlich wäre es auch denkbar, dass das zusätzliche Bezugselement 66e lediglich über das Befestigungsmodul 36e, insbesondere über wenigstens eines der beiden Befestigungsmittel 40e, 42e, an die Kopfstütze 22e angebunden ist. Dadurch kann das zusätzliche Befestigungselement 66e besonders einfach und ohne zusätzliche Anbindungsmittel an die Kopfstütze 22e angebunden werden.

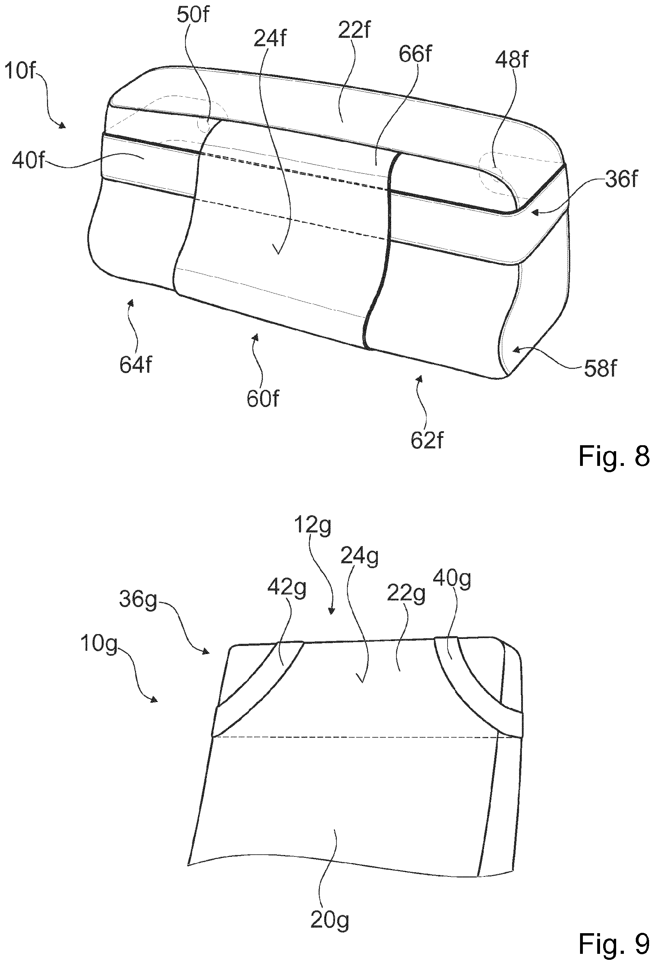

In der Figur 8 ist ein weiteres Ausführungsbeispiel einer nicht erfindungsgemäßen Kopfstützenvorrichtung 10f dargestellt. Die Kopfstützenvorrichtung 10f ist als Teil eines Sitzes ausgebildet. Der Sitz ist im Wesentlichen gleich ausgebildet wie der entsprechende Sitz aus dem ersten Ausführungsbeispiel und umfasst ebenfalls einen Sitzboden und eine Rückenlehne. Die Kopfstützenvorrichtung 10f ist Teil des Sitzes und weist eine Kopfstütze 22f auf. Die Kopfstütze 22f ist in einem oberen Bereich der Rückenlehne angeordnet. Die Kopfstütze 22f ist dazu vorgesehen, einen Kopfabstützbereich 24f für einen Passagier auszubilden. Die Kopfstütze 22f ist dabei im Wesentlichen identisch zu der entsprechenden Kopfstütze aus dem fünften Ausführungsbeispiel der Figur 7 ausgebildet. Die Kopfstütze 22f bildet einen Nackenstützbereich 58f aus. Zur Ausbildung des Nackenstützbereichs 58f ist die Kopfstütze 22f in einem unteren Bereich dicker ausgebildet als in einem oberen Bereich. Dabei weist der Nackenstützbereich 58f einen Mittelbereich 60f und zwei Seitenbereiche 62f, 64f auf, wobei der Nackenstützbereich 58f im Unterschied zu dem fünften Ausführungsbeispiel der Figur 7 in den beiden Seitenbereichen 62f, 64f und dem Mittelbereich 60f gleich ausgebildet ist.

Die Kopfstützenvorrichtung 10f umfasst ein Befestigungsmodul 36f. Das Befestigungsmodul 36f ist dazu vorgesehen, dass zumindest ein persönlicher Gegenstand, der in der Figur 8 nicht näher dargestellt ist, in dem Kopfabstützbereich 24f angebracht werden kann. Ein Gegenstand ist mittels des Befestigungsmoduls 36f verliersicher an der Kopfstütze 22f anbringbar. Insbesondere ist ein Gegenstand mittels des Befestigungsmoduls 36f mittels einer Klemmverbindung mit an die Kopfstütze 22f anbindbar. Zur Anbringung des persönlichen Gegenstands 38f in dem Kopfabstützbereich 24f weist das Befestigungsmodul 36f ein Befestigungsmittel 40f auf. Im Unterschied zu den anderen Ausführungsbeispielen weist das Befestigungsmodul 36f lediglich das eine Befestigungsmittel 40f auf. Das Befestigungsmittel 40f ist als ein elastisches Band ausgebildet und mit seinen beiden Enden über Anbindungsmittele 48f, 50f fest an die Kopfstütze 22f angebunden. Das Befestigungsmittel 40f verläuft auf einer Vorderseite der Kopfstütze 22f horizontal von einem seitlichen Ende der Kopfstütze 22f zu einem gegenüberliegenden Ende der Kopfstütze 22f. In dem Mittelbereich 60f ist das Befestigungsmittel 40f dabei von einem Bezugselement 66f verdeckt. Grundsätzlich ist es allerdings auch denkbar, dass das Befestigungsmittel 40f in dem Mittelbereich 60f nicht verdeckt ist und von dem einen seitlichen Ende der Kopfstütze 22f zu einem gegenüberliegenden Ende der Kopfstütze 22f durchgängig ausgebildet ist.

In der Figur 9 ist ein siebtes Ausführungsbeispiel einer Kopfstützenvorrichtung 10g dargestellt, die nicht erfindungsgemäß ausgestaltet ist und lediglich zur Veranschaulichung dient. Die Kopfstützenvorrichtung 10g ist als Teil eines Sitzes 12g ausgebildet. Der Sitz 12g ist im Wesentlichen gleich ausgebildet wie der entsprechende Sitz aus dem ersten Ausführungsbeispiel und umfasst ebenfalls einen Sitzboden und eine Rückenlehne 20g. Die Kopfstützenvorrichtung 10g ist Teil des Sitzes 12g und weist eine Kopfstütze 22g auf. Die Kopfstütze 22g ist in einem oberen Bereich der Rückenlehne 20g angeordnet. Die Kopfstütze 22g ist dazu vorgesehen, einen Kopfabstützbereich 24g für einen Passagier auszubilden. Im Unterschied zu den vorhergehenden Ausführungsbeispielen ist die Kopfstütze 22g als ein integraler Teil der Rückenlehne 20g ausgebildet. Die Kopfstütze 22g ist als ein oberer Bereich der Rückenlehne 20g ausgebildet. Insbesondere weist der Sitz 12g kein zusätzliches, von der Rückenlehne 20g trennbares Bauteil auf, das die Kopfstütze 22g ausbildet.

Die Kopfstützenvorrichtung 10g umfasst ein Befestigungsmodul 36g. Das Befestigungsmodul 36g ist dazu vorgesehen, dass zumindest ein persönlicher Gegenstand, der in der Figur 7 nicht näher dargestellt ist, in dem Kopfabstützbereich 24g angebracht werden kann. Ein Gegenstand ist mittels des Befestigungsmoduls 36g verliersicher an der Kopfstütze 22g anbringbar. Insbesondere ist ein Gegenstand mittels des Befestigungsmoduls 36g mittels einer Klemmverbindung mit an die Kopfstütze 22g anbindbar. Zur Anbringung des persönlichen Gegenstands 38g in dem Kopfabstützbereich 24g weist das Befestigungsmodul 36g ein erstes Befestigungsmittel 40g und ein zweites Befestigungsmittel 42g auf. Die Befestigungsmittel 40g, 42g sind als Bänder ausgebildet. Die Befestigungsmittel 40g, 42g sind dabei insbesondere als elastische Bänder ausgebildet. Die Befestigungsmittel 40g, 42g sind dadurch elastisch verlängerbar ausgebildet. Die beiden Befestigungsmittel 40g, 42g sind in einem äußeren Bereich der Kopfstütze 22g angeordnet. Dabei umspannen die beiden zusätzlichen Befestigungsmittel 40g, 42g jeweils eine obere Ecke 54g, 56g der Kopfstütze 22g, die von den oberen Ecken der Rückenlehne 20g gebildet sind. Die Befestigungsmittel 40g, 42g verlaufen dabei von einem oberen Ende der Rückenlehne 20g jeweils an ein benachbartes seitliches Ende der Rückenlehne 20g.

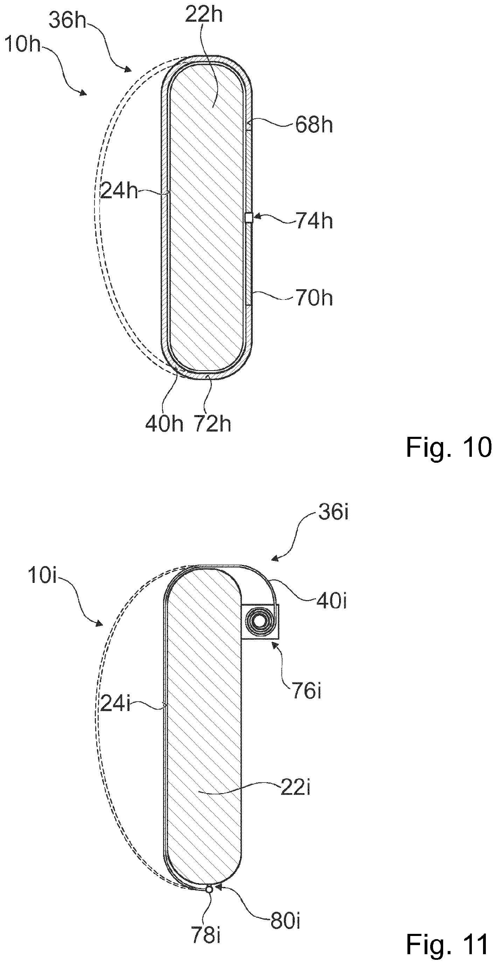

In der Figur 10 ist ein achtes Ausführungsbeispiel einer Kopfstützenvorrichtung 10h dargestellt , die nicht erfindungsgemäß ausgestaltet ist und lediglich zur Veranschaulichung dient. Die Kopfstützenvorrichtung 10h ist als Teil eines Sitzes ausgebildet. Der Sitz ist im Wesentlichen gleich ausgebildet wie der entsprechende Sitz aus dem ersten Ausführungsbeispiel und umfasst ebenfalls einen Sitzboden und eine Rückenlehne. Die Kopfstützenvorrichtung 10h ist Teil des Sitzes und weist eine Kopfstütze 22h auf. Die Kopfstütze 22h ist in einem oberen Bereich der Rückenlehne angeordnet. Die Kopfstütze 22h ist dazu vorgesehen, einen Kopfabstützbereich 24h für einen Passagier auszubilden. Die Kopfstütze 22h ist dabei in der Figur 10 in einer Schnittdarstellung dargestellt.

Die Kopfstützenvorrichtung 10h umfasst ein Befestigungsmodul 36h. Das Befestigungsmodul 36h ist dazu vorgesehen, dass zumindest ein persönlicher Gegenstand, der in der Figur 10 nicht näher dargestellt ist, in dem Kopfstützbereich 24h angebracht werden kann. Ein Gegenstand ist mittels des Befestigungsmoduls 36h verliersicher an der Kopfstütze 22h anbringbar. Insbesondere ist ein Gegenstand mittels des Befestigungsmoduls 36h mittels einer Klemmverbindung mit an die Kopfstütze 22h anbindbar. Zur Anbringung des persönlichen Gegenstands in dem Kopfabstützbereich 24h weist das Befestigungsmodul 36h ein Befestigungsmittel 40h auf. Das Befestigungsmittel 40h weist zwei elastische Teilbereiche 68h, 70h auf. Die elastischen Teilbereiche sind insbesondere als elastische Bänder ausgebildet. Die Teilbereiche 68h, 70h des Befestigungsmittels 40h sind dadurch elastisch verlängerbar ausgebildet. Die Teilbereiche 68h, 70h des Befestigungsmittels 40h können dabei insbesondere aus einem Material gebildet sein wie die entsprechenden Befestigungsmittel aus den vorhergehenden Ausführungsbeispielen. Die Teilbereiche 68h, 70h des Befestigungsmittels 40h verlaufen dabei auf einer Rückseite 74h der Kopfstütze 22h. Insbesondere sind die Teilbereiche 68h, 70h des Befestigungsmittels 40h in einem nicht sichtbaren Bereich der Kopfstütze 22h angeordnet. Dabei ist es insbesondere denkbar, dass die Teilbereiche 68h, 70h des Befestigungsmittels 40h unter einem Bezug der Kopfstütze 22h angeordnet sind. Grundsätzlich können die Teilbereiche 68h, 70h des Befestigungsmittels 40h auch zumindest teilweise innerhalb der Kopfstütze 22h angeordnet sein. Das Befestigungsmittel 40h weist einen unelastischen Teilbereich 72h auf. Der unelastische Teilbereich 72h ist zwischen den beiden elastischen Teilbereichen 68h, 70h angeordnet. Mit einem ersten Ende ist der unelastische Teilbereich 72h mit dem einen elastischen Teilbereich 68h verbunden. Mit einem zweiten Ende ist der unelastische Teilbereich 72h mit dem anderen elastischen Teilbereich 70h verbunden. Dabei ist der unelastische Teilbereich 72h über jeweils wenigstens eine Naht fest mit den elastischen Teilbereichen 68h, 70h verbunden. Es ist grundsätzlich auch denkbar, dass die Teilbereiche 68h, 70h, 72h auf eine andere, dem Fachmann als sinnvoll erscheinende Art miteinander verbunden sind. Der unelastische Teilbereich 72h ist dabei aus einem minimal elastischen Material gebildet. Der unelastische Teilbereich 72h ist dabei aus einem Leder gebildet. Grundsätzlich ist es auch denkbar, dass der unelastische Teilbereich 72h aus einem anderen Material gebildet ist, wie beispielsweise aus einem Gewebe oder einem Kunststoff. Vorzugsweise weist der unelastische Teilbereich 72h dabei eine besonders große Wertigkeit auf. Das Befestigungsmittel 40h ist über ein Anbindungselement 74h mit der Kopfstütze 22h verbunden. Das Anbindungselement 74h bindet die beiden elastischen Teilbereiche 68a, 70h zusammen an die Rückseite der Kopfstütze 22h an. Das Anbindungselement 74h ist dabei als ein Druckknopf ausgebildet. Grundsätzlich sind hier natürlich auch anders ausgebildete Anbindungselemente denkbar. Grundsätzlich ist es auch denkbar, dass die Teilbereiche 68h, 70h des Befestigungsmittels 40h jeweils einzeln über ein entsprechendes Anbindungselement an die Kopfstütze 22h angebunden sind. Dabei ist es insbesondere auch denkbar, dass die Teilbereiche 68h, 70h des Befestigungsmittels 40h an unterschiedlichen Stellen an die Kopfstütze 22h angebunden sind. Zur Anbindung eines persönlichen Gegenstands kann ein Passagier an dem unelastischen Teilbereich 72h des Befestigungsmittels 40h ziehen, wodurch sich die elastischen Teilbereiche 68h, 70h entsprechend elastisch verlängern. In einen dadurch entstehenden Zwischenraum zwischen dem unelastischen Teilbereich 72h des Befestigungsmittels 40h und der Kopfstütze 22h kann der persönliche Gegenstand nun eingeklemmt werden. Grundsätzlich ist es denkbar, dass das Befestigungsmodul 36h weitere Befestigungsmittel 40h aufweist, die über den Kopfabstützbereich 24h der Kopfstütze 22h verteilt sind.

In der Figur 11 ist ein neuntes Ausführungsbeispiel einer Kopfstützenvorrichtung 10i dargestellt, die nicht erfindungsgemäß ausgestaltet ist und lediglich zur Veranschaulichung dient. Die Kopfstützenvorrichtung 10i ist als Teil eines Sitzes ausgebildet. Der Sitz ist im Wesentlichen gleich ausgebildet wie der entsprechende Sitz aus dem ersten Ausführungsbeispiel und umfasst ebenfalls einen Sitzboden und eine Rückenlehne. Die Kopfstützenvorrichtung 10i ist Teil des Sitzes und weist eine Kopfstütze 22i auf. Die Kopfstütze 22i ist in einem oberen Bereich der Rückenlehne angeordnet. Die Kopfstütze 22i ist dazu vorgesehen, einen Kopfabstützbereich 24i für einen Passagier auszubilden. Die Kopfstütze 22i ist dabei in der Figur 10 in einer Schnittdarstellung dargestellt.

Die Kopfstützenvorrichtung 10i umfasst ein Befestigungsmodul 36i. Das Befestigungsmodul 36i ist dazu vorgesehen, dass zumindest ein persönlicher Gegenstand, der in der Figur 11 nicht näher dargestellt ist, in dem Kopfstützbereich 24i angebracht werden kann. Ein Gegenstand ist mittels des Befestigungsmoduls 36i verliersicher an der Kopfstütze 22i anbringbar. Insbesondere ist ein Gegenstand mittels des Befestigungsmoduls 36i mittels einer Klemmverbindung mit an die Kopfstütze 22i anbindbar. Zur Anbringung des persönlichen Gegenstands in dem Kopfabstützbereich 24i weist das Befestigungsmodul 36i ein Befestigungsmittel 40i auf. Das Befestigungsmittel 40i ist dabei als ein unelastisches Band ausgebildet. Das Befestigungsmittel 40i ist dabei aus einem minimalelastischen Material gebildet. Das Befestigungsmittel 40i ist dabei aus einem Leder gebildet. Die Befestigungsvorrichtung 36i weist eine Spann- und Aufbewahrungsvorrichtung 76i auf. Die Spann- und Aufbewahrungsvorrichtung 76i ist dazu vorgesehen, das Befestigungsmittel 40i zu spannen und zumindest teilweise aufzunehmen. Die Spann- und Aufbewahrungsvorrichtung 76i ist als eine federbelastete Aufrollvorrichtung ausgebildet. Das Befestigungsmittel 40i ist auf einer Rolle der Spann- und Aufbewahrungsvorrichtung 76i aufgerollt. Die Rolle der Spann- und Aufbewahrungsvorrichtung 76i ist dabei über eine nicht näher dargestellte Feder vorgespannt und übt eine Einrollkraft auf das Befestigungsmittel 40i aus. Mit einem ersten Ende ist das Befestigungsmittel 40i mit der Rolle der Spann- und Aufbewahrungsvorrichtung 76i fest verbunden. Die Spann- und Aufbewahrungsvorrichtung 76i ist dabei auf einer Rückseite der Kopfstütze 22i an deren oberen Ende angeordnet. Die Spann- und Aufbewahrungsvorrichtung 76i kann grundsätzlich auch in die Kopfstütze 22i und/oder die Rückenlehne integriert sein. Dabei wäre die Spann- und Aufbewahrungsvorrichtung 76i jeweils zumindest im Wesentlichen innerhalb der Kopfstütze 22i oder der Rückenlehne angeordnet. Ein zweites Ende des Befestigungsmittels 40i bildet ein Formschlusselement 78i aus. Das Befestigungsmodul 36i weist an einer Unterseite der Kopfstütze 22i ein korrespondierend zu dem Formschlusselement 78i des Befestigungsmittels 40i ausgebildetes Formschlusselement 80i aus. Die Formschlusselemente 78i, 80i sind dabei als eine Druckknopfverbindung ausgebildet. In einem verstauten Zustand ist das Befestigungsmittel 40i auf der Rolle der Spann- und Aufbewahrungsvorrichtung 76i aufgerollt und lediglich das zweite Ende mit dem Formschlusselement 78i ragt aus einem Gehäuse der Spann- und Aufbewahrungsvorrichtung 76i. Zum Anbringen eines persönlichen Gegenstandes kann ein Passagier nun das Befestigungsmittel 40i ergreifen und durch Ziehen von der Rolle der Spann- und Aufbewahrungsvorrichtung 76i abrollen, den persönlichen Gegenstand zwischen der Kopfstütze 22i und dem Befestigungsmittel 40i platzieren und das Befestigungsmittel 40i mit seinem Formschlusselement 78i an dem Formschlusselement 80i des Befestigungsmoduls 36i an der Kopfstütze befestigen. Durch die federbelastete Rolle der Spann- und Aufbewahrungsvorrichtung 76i wird das Befestigungsmittel 40i gespannt und der persönliche Gegenstand zwischen dem Befestigungsmittel 40i und der Kopfstütze 22i eingeklemmt. Grundsätzlich ist es denkbar, dass das Befestigungsmodul 36 weitere über jeweils eine Spann- und Aufbewahrungsvorrichtung 76i angebrachte Befestigungsmittel 40i aufweist.

### Bezugszeichen

- 10: Kopfstützenvorrichtung
- 12: Sitz
- 14: Sitzreihe
- 16: Aufständereinheit
- 18: Sitzboden
- 20: Rückenlehne
- 22: Kopfstütze
- 24: Kopfabstützbereich
- 26: Grundkörper
- 28: Bezugselement
- 30: Gummielement
- 32: Lagereinheit
- 34: Bewegungsachse
- 36: Befestigungsmodul
- 38: Gegenstand
- 40: Befestigungsmittel
- 42: Befestigungsmittel
- 44: Befestigungsmittel
- 46: Befestigungsmittel
- 48: Anbindungsmittel
- 50: Anbindungsmittel
- 52: Durchgangsloch
- 54: Ecke
- 56: Ecke
- 58: Nackenstützbereich
- 60: Mittelbereich
- 62: Seitenbereich
- 64: Seitenbereich
- 66: Bezugselement
- 68: elastischer Teilbereich
- 70: elastischer Teilbereich
- 72: unelastischer Teilbereich
- 74: Anbindungselement
- 76: Spann- und Aufbewahrungsvorrichtung
- 78: Formschlusselement
- 80: Formschlusselement

## Patentansprüche

1. Kopfstützenvorrichtung für einen Sitz (12a; 12b; 12c; 12d), insbesondere einen Flugzeugsitz, welche eine Kopfstütze (22a; 22b; 22c; 22d) aufweist, die als ein separates, mit einer Rückenlehne des Sitzes (12a: 12b; 12c; 12d) verbindbares Element ausgebildet ist, die wenigstens einen Kopfabstützbereich (24a; 24b; 24c; 24d) ausbildet und wenigstens ein Bezugselement (28a) aufweist, umfassend zumindest ein Befestigungsmodul (36a; 36b; 36c; 36d) mit wenigstens einem Befestigungsmittel (40a, 42a; 40b, 42b; 42c; 40d, 42d), das auf einer Vorderseite der Kopfstütze (22a) von einem oberen Ende zu einem unteren Ende verläuft und das als ein elastisches Band ausgebildet ist, das an dem Bezugselement (28a) angebracht und das dazu vorgesehen ist, zumindest einen persönlichen Gegenstand (38a; 38d), der ein Kissen, ein Kleidungsstück oder eine Decke ist, in dem Kopfabstützbereich (24a; 24b; 24c; 24d) anzubringen, wobei ein auf dem Sitz (12a) sitzender Passagier den persönlichen Gegenstand (38a) mittels des Befestigungsmoduls (36a) über das Befestigungsmittel (40a, 42a) an die Kopfstütze (22a) anbinden kann, wozu der Passagier das Befestigungsmittel (40a, 42a) durch Ziehen an dem Befestigungsmittel (40a, 42a) elastisch verlängern kann, wodurch zwischen dem Kopfabstützbereich (24a) der Kopfstütze (22a) und dem Befestigungsmittel (40a, 42a) ein Raum entsteht, in den der Passagier den Gegenstand (38a) einführen kann.

2. Kopfstützenvorrichtung nach Anspruch 1, **dadurch gekennzeichnet, dass** das wenigstens eine Befestigungsmittel (40a, 42a; 40b, 42b; 42c; 40d, 42d) dazu vorgesehen ist, einen persönlichen Gegenstand (38a; 38d) seitlich im Kopfabstützbereich (24a; 24b; 24c; 24d) anzubringen.

3. Kopfstützenvorrichtung nach Anspruch 1 oder 2, **dadurch gekennzeichnet, dass** das Befestigungsmodul (36a; 36b; 36c; 36d) wenigstens zwei Befestigungsmittel (40a, 42a; 40b, 42b; 40c, 42c; 40d, 42d) aufweist, die an gegenüberliegenden Seiten des Kopfabstützbereichs (24a; 24b; 24c; 24d) angeordnet sind.

4. Kopfstützenvorrichtung nach einem der vorhergehenden Ansprüche, **dadurch gekennzeichnet, dass** das wenigstens eine Befestigungsmittel (40a, 42a; 40c, 42c; 40d, 42d) zumindest ein Anbindungsmittel (48a, 50a; 50c) aufweist, mittels dessen das Befestigungsmittel (40a, 42a; 42c; 40d, 42d) an die Kopfstütze (22a; 22c; 22d) angebunden werden kann.

5. Kopfstützenvorrichtung nach einem der vorhergehenden Ansprüche, **dadurch gekennzeichnet, dass** das Befestigungsmodul (36b) als ein von der Kopfstütze (22b) getrenntes Einzelmodul ausgebildet ist.

6. Kopfstützenvorrichtung nach einem der vorhergehenden Ansprüche, **dadurch gekennzeichnet, dass** die Kopfstütze (22) wenigstens ein zusätzliches Bezugselement (66) aufweist, das dazu vorgesehen ist, zusammen mit dem Befestigungsmodul (36) an der Kopfstütze (22) angebracht zu werden.

7. Kopfstützenvorrichtung nach einem der vorhergehenden Ansprüche, **dadurch gekennzeichnet, dass** das Befestigungsmittel (40) zumindest einen elastischen Teilbereich (68, 70) und einen unelastischen Teilbereich (72) aufweist.

8. Kopfstützenvorrichtung nach Anspruch 7, **dadurch gekennzeichnet, dass** der zumindest eine elastische Teilbereich (68, 70) auf einer Rückseite der Kopfstütze (22) angeordnet ist.

## Claims

1. Headrest device for a seat (12a; 12b; 12c; 12d), in particular an airplane seat, comprising a headrest (22a; 22b; 22c; 22d) which is implemented as a separate element that is connectable to a backrest of the seat (12a; 12b; 12c; 12d), which forms at least a head support region (24a; 24b; 24c; 24d) and has at least one cover element (28a),
comprising at least one fixation module (36a; 36b; 36c; 36d) with at least one fixation means (40a, 42a; 40b, 42b; 42c; 40d, 42d) extending on a front side of the headrest (22a) from an upper end to a lower end and embodied as an elastic strap that is mounted on the cover element (28a) and is configured for attaching at least one personal item (38a; 38d), which is a pillow, a piece of clothing or a blanket, in the head support region (24a; 24b; 24c; 24d),
wherein a passenger sitting on the seat (12a) can attach the personal item (38a) to the headrest (22a) via the fixation module (36a) by the fixation means (40a, 42a),
the passenger being for this purpose enabled to elastically elongate the fixation means (40a, 42a) by pulling on the fixation means (40a, 42a), such that between the head support region (24a) of the headrest (22a) and the fixation means (40a, 42a) a space is formed which the passenger may introduce the object (38a) into.

2. Headrest device according to claim 1,
**characterised in that** the at least one fixation means (40a, 42a; 40b, 42b; 42c; 40d, 42d) is configured for attaching a personal item (38a; 38d) laterally in the head support region (24a; 24b; 24c; 24d).

3. Headrest device according to claim 1 or 2,
**characterised in that** the fixation module (36a; 36b; 36c; 36d) comprises at least two fixation means (40a, 42a; 40b, 42b; 40c, 42c; 40d, 42d), which are arranged on opposite-situated sides of the head support region (24a; 24b; 24c; 24d).

4. Headrest device according to one of the preceding claims,
**characterised in that** the at least one fixation means (40a, 42a; 40c; 42c; 40d, 42d) comprises at least one connection member (48a, 50a; 50c) by means of which the fixation means (40a, 42a; 42c; 40d, 42d) is connectable to the headrest (22a; 22c; 22d).

5. Headrest device according to one of the preceding claims,
**characterised in that** the fixation module (36b) is embodied as a single module that is separate from the headrest (22b).

6. Headrest device according to one of the preceding claims,
**characterised in that** the headrest (22) comprises at least one additional cover element (66), which is configured to be mounted on the headrest (22) together with the fixation module (36).

7. Headrest device according to one of the preceding claims,
**characterised in that** the fixation means (40) comprises at least one elastic portion (68, 70) and an inelastic portion (72).

8. Headrest device according to claim 7,
**characterised in that** the at least one elastic portion (68, 70) is arranged on a rear side of the headrest (22).

## Revendications

1. Dispositif d'appuie-tête pour un siège (12a ; 12b ; 12c ; 12d), notamment un siège d'aéronef,
comprenant un appuie-tête (22a ; 22b ; 22c) réalisé comme élément séparé et raccordable à un dossier du siège (12a ; 12b ; 12c ; 12c), qui forme au moins une zone à support de tête (24a ; 24b ; 24c ; 24d) et qui comprend au moins un élément de housse (28a),
comprenant au moins un module de fixement (36a ; 36b ; 36c ; 36d) avec au moins un moyen de fixement (40a, 42a ; 40b, 42b ; 42c ; 40d, 42d) qui s'étend sur une face antérieure de l'appuie-tête (22a) d'une extrémité supérieure à une extrémité inférieure et est réalisé comme sangle élastique montée sur l'élément de housse (28a) et prévue pour attacher au moins un objet personnel (38a ; 38d), à savoir un coussin, une pièce de vêtement ou une couverture, dans la zone à support de tête (24a ; 24b ; 24c ; 24d),
où un passager assis sur le siège (12a) peut raccorder l'objet personnel (38a), qui est un coussin, une pièce de vêtement ou une couverture, à l'appuie-tête (22a) par le biais du module de fixement (36a) par le moyen de fixement (40a, 42a), afin de quoi le passager peut rallonger le moyen de fixement (40a, 42a) élastiquement en tirant le moyen de fixement (40a, 42a), en conséquence de quoi se forme un espace entre la zone à support de tête (24a) de l'appuie-tête (22a) et le moyen de fixement (40a, 42a), dans lequel le passager peut insérer l'objet (38a).

2. Dispositif d'appuie-tête selon la revendication 1,
**caractérisé en ce que** l'au moins un moyen de fixement (40a, 42a ; 40b, 42b ; 42c ; 40d, 42d) est prévu à attacher un objet personnel (38a ; 38d) latéralement dans la zone à support de tête (24a ; 24b ; 24c ; 24d).

3. Dispositif d'appuie-tête selon la revendication 1 ou 2,
**caractérisé en ce que** le module de fixement (36a ; 36b ; 36c ; 36d) comporte au moins deux moyens de fixement (40a, 42a ; 40b, 42b ; 40c, 42c ; 40d, 42d) disposés aux côtés opposés de la zone à support de tête (24a ; 24b ; 24c ; 24d).

4. Dispositif d'appuie-tête selon l'une des revendications précédentes,
**caractérisé en ce que** l'au moins un moyen de fixement (40a, 42a ; 40c, 42c ; 40d, 42d) comporte au moins un moyen de raccordement (48a, 50a ; 50c) par lequel le moyen de fixement (40a, 42a ; 42c ; 40d, 42d) peut être raccordé à l'appuie-tête (22a ; 22c ; 22d).

5. Dispositif d'appuie-tête selon l'une des revendications précédentes,
**caractérisé en ce que** le module de fixement (36b) est réalisé comme module individuel séparé de l'appuie-tête (22b).

6. Dispositif d'appuie-tête selon l'une des revendications précédentes,
**caractérisé en ce que** l'appuie-tête (22) comporte au moins un élément de housse de plus (66) qui est prévue à être monté à l'appuie-tête (22) conjointement avec le module de fixement (36).

7. Dispositif d'appuie-tête selon l'une des revendications précédentes,
**caractérisé en ce que** le moyen de fixement (40) comporte au moins une sub-zone élastique (68, 70) et une sub-zone inélastique (72).

8. Dispositif d'appuie-tête selon la revendication 7,
**caractérisé en ce que** l'au moins une sub-zone élastique (68, 70) est disposée sur un côté arrière de l'appuie-tête (22).
